# EUROPEAN PATENT APPLICATION

(11) **EP 4 047 534 A2**
(43) Date of publication of application: **24.08.2022**
(21) Application number: 22183757.8
(22) Date of filing: 08.07.2022
(51) Int. Cl.: G06Q 10/10, G06Q 50/30, G06Q 40/08

(54) **TRAFFIC ACCIDENT DATA PROCESSING METHOD AND APPARATUS, STORAGE MEDIUM AND COMPUTER PROGRAM PRODUCT**

(30) Priority: 09.08.2021 CN 202110910277
(71) Applicant: Apollo Intelligent Connectivity (Beijing) Technology Co., Ltd., Beijing 100176 (CN)
(72) Inventor: LI, Liping, Beijing, 100176 (CN)
(74) Representative: J A Kemp LLP

(57) **Abstract**

A traffic accident processing method and apparatus, a device, a storage medium and a program product provided by the present disclosure relate to automatic driving technology, including: receiving traffic accident information reported by a vehicle, where the traffic accident information is acquired when the vehicle determines that a traffic accident occurs according to sensor information; transmitting the traffic accident information to an accident processing terminal, where the accident processing terminal is configured to determine accident processing information according to the traffic accident information; and receiving the accident processing information transmitted by the accident processing terminal, and synchronizing the accident processing information with the vehicle and an insurance processing terminal. In the solution provided by the present disclosure, after a traffic accident occurs, the vehicle may report the traffic accident information to the server, so that the server may coordinate respective terminals to process the accident, thereby improving efficiency of processing the traffic accident.

## Description

### TECHNICAL FIELD

The present disclosure relates to automatic driving technology in artificial intelligence technology and, in particular, to a traffic accident processing method and apparatus, a device, a storage medium and a program product.

### BACKGROUND

At present, if a traffic accident occurs on the road, an owner of a vehicle needs to take a picture of an accident scene, and then move the vehicle to a safe location. In some special cases, some owners of vehicles will not move the vehicles, so that traffic police arrive at the accident scene and determine liability according to situations on the scene.

However, in this process, the communication efficiency between the owners of the vehicles is low, and the vehicles needs to wait in-place for the arrival of the traffic police, thus easily leading to a traffic jam.

Therefore, there is an urgent need for a quick solution to solve traffic accidents in prior art.

### SUMMARY

The present disclosure provides a traffic accident processing method and apparatus, a device, a storage medium and a program product, to provide a quick solution to solve the traffic accident.

According to a first aspect of the present disclosure, a traffic accident processing method is provided, including:
receiving traffic accident information reported by a vehicle, where the traffic accident information is acquired when the vehicle determines that a traffic accident occurs according to sensor information;
transmitting the traffic accident information to an accident processing terminal, where the accident processing terminal is configured to determine accident processing information according to the traffic accident information; and
receiving the accident processing information transmitted by the accident processing terminal, and synchronizing the accident processing information with the vehicle and an insurance processing terminal.

According to a second aspect of the present disclosure, a traffic accident processing method is provided, traffic accident processing method is applied to a vehicle and includes:
acquiring sensor information, and acquiring traffic accident information if it is determined that a traffic accident occurs according to the sensor information;
transmitting the traffic accident information to a server, so that the server processes the traffic accident according to the traffic accident information; and
receiving an accident result fed back by the server, and executing a driving strategy according to the accident result.

According to a third aspect of the present disclosure, a traffic accident processing apparatus is provided, including:
an accident information receiving unit, configured to receive traffic accident information reported by a vehicle, where the traffic accident information is acquired when the vehicle determines that a traffic accident occurs according to sensor information;
an accident information transmitting unit, configured to transmit the traffic accident information to an accident processing terminal, where the accident processing terminal is configured to determine accident processing information according to the traffic accident information;
a processing information receiving unit, configured to receive the accident processing information transmitted by the accident processing terminal; and
a processing information transmitting unit, configured to synchronize the accident processing information with the vehicle and an insurance processing terminal.

According to a fourth aspect of the present disclosure, a traffic accident processing apparatus is provided, including:
an acquiring unit, configured to acquire sensor information, and acquire traffic accident information if it is determined that a traffic accident occurs according to the sensor information;
an accident reporting unit, configured to transmit the traffic accident information to a server, so that the server processes the traffic accident according to the traffic accident information; and
a driving unit, configured to receive an accident result fed back by the server, and execute a driving strategy according to the accident result.

According to a fifth aspect of the present disclosure, an electronic device is provided, including:
at least one processor; and
a memory in communicational connection with the at least one processor; where,
the memory stores instructions executable by the at least one processor, and the instructions are executed by the at least one processor to enable the at least one processor to execute the method according to the first aspect or the second aspect.

According to a sixth aspect of the present disclosure, a computer program product is provided, the computer program product includes a computer program, the computer program is stored in a readable storage medium, at least one processor of an electronic device may read the computer program from the readable storage medium, the at least one processor executes the computer program to enable the electronic device to execute the method according to the first aspect or the second aspect.

According to a seventh aspect of the present disclosure, a non-transitory computer-readable storage medium storing computer instructions is provided, where the computer instructions are used to enable a computer to execute the method according to the first aspect or the second aspect.

The traffic accident processing method and apparatus, device, storage medium and program product provided by the present disclosure include: receiving traffic accident information reported by a vehicle, where the traffic accident information is acquired when the vehicle determines that a traffic accident occurs according to sensor information; transmitting the traffic accident information to an accident processing terminal, where the accident processing terminal is configured to determine accident processing information according to the traffic accident information; and receiving the accident processing information transmitted by the accident processing terminal, and synchronizing the accident processing information with the vehicle and an insurance processing terminal. In the solution provided by the present disclosure, after a traffic accident occurs, the vehicle may report the traffic accident information to the server, so that the server may coordinate respective terminals to process the accident, thereby improving efficiency of processing the traffic accident.

It should be understood that the content described in this section is not intended to identify essential or significant features of the embodiments of the present disclosure, nor is it intended to limit the scope of the present disclosure. Other features of the present disclosure will become easy to understand by the following description.

### BRIEF DESCRIPTION OF DRAWINGS

The accompanying drawings are used for a better understanding of the solution, and do not form a limitation of the present disclosure, in which:
FIG. 1 is a schematic flowchart of a traffic accident processing method illustrated by a first exemplary embodiment of the present disclosure;
FIG. 2 is a schematic diagram of a traffic accident processing process illustrated by an exemplary embodiment of the present disclosure;
FIG. 3 is a schematic flowchart of a traffic accident processing method illustrated by a second exemplary embodiment of the present disclosure;
FIG. 4 is a diagram of an application scenario illustrated by an exemplary embodiment of the present disclosure;
FIG. 5 is a schematic flowchart of a traffic accident processing method illustrated by a third exemplary embodiment of the present disclosure;
FIG. 6 is a schematic flowchart of a traffic accident processing method illustrated by a fourth exemplary embodiment of the present disclosure;
FIG. 7 is a schematic structural diagram of a traffic accident processing apparatus illustrated by a first exemplary embodiment of the present disclosure;
FIG. 8 is a schematic structural diagram of a traffic accident processing apparatus illustrated by a second exemplary embodiment of the present disclosure;
FIG. 9 is a schematic structural diagram of a traffic accident processing apparatus illustrated by a third exemplary embodiment of the present disclosure;
FIG. 10 is a schematic structural diagram of a traffic accident processing apparatus illustrated by a fourth exemplary embodiment of the present disclosure; and
FIG. 11 is a block diagram of an electronic device for implementing a method of an embodiment of the present disclosure.

### DESCRIPTION OF EMBODIMENTS

Exemplary embodiments of the present disclosure are described below with reference to the accompanying drawings, and include various details of the embodiments of the present disclosure to facilitate understanding, which should be considered as merely exemplary. Therefore, those ordinary skilled in the art should recognize that various changes and modifications may be made to the embodiments described herein without departing from the scope of the present application. Also, for clarity and conciseness, descriptions of well-known functions and structures are omitted in the following description.

At present, if a traffic accident occurs on the road, both sides involved in the accident need to take a picture to obtain evidence. If the accident is relatively simple, the driver may drive the vehicle away after taking the picture. If the accident is more complicated, it is necessary to wait for traffic police to process, and then the vehicle may only be moved after the traffic police have finished processing.

Therefore, when the traffic accident occurs, the driver needs to take the picture on the road, which is dangerous for the driver. In addition, if the vehicle needs to wait in-place and may only be moved until the traffic police come to process, it will also cause a traffic jam. In summary, an efficiency of processing traffic accidents in the prior art is too low.

In order to solve the above problem, the present disclosure provides a traffic accident processing solution. After a traffic accident occurs, accident information may be reported to a server by a vehicle, and the server coordinates respective clients to process the traffic accident, thereby improving efficiency of processing the accident.

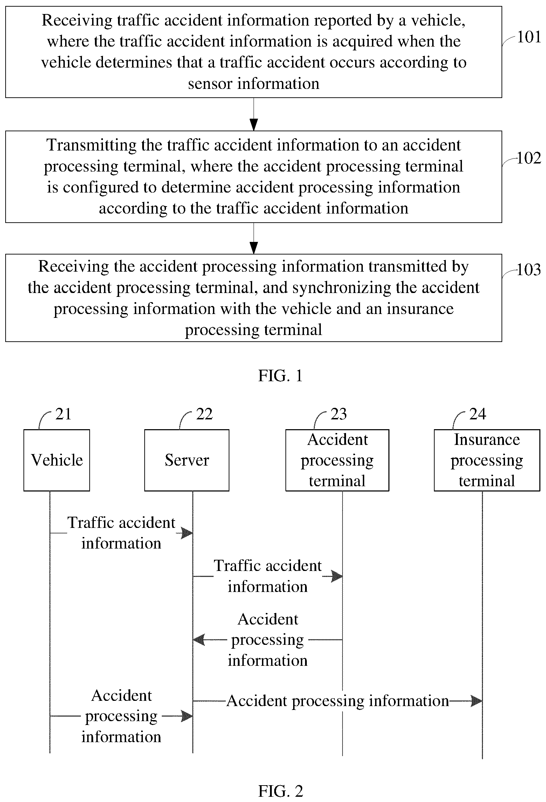

FIG. 1 is a schematic flowchart of a traffic accident processing method illustrated by a first exemplary embodiment of the present disclosure.

As shown in FIG. 1, the traffic accident processing method provided by the present disclosure includes:
Step 101: receiving traffic accident information reported by a vehicle, where the traffic accident information is acquired when the vehicle determines that a traffic accident occurs according to sensor information.

Where the method provided by the present disclosure is applied to a server side of a traffic accident processing platform.

Specifically, an in-vehicle equipment may be arranged on the vehicle, and the in-vehicle equipment may collect sensor information by sensors arranged on the vehicle, and then determine whether a traffic accident occurs in combination with each sensor information. For example, the in-vehicle equipment may determine whether a traffic accident occurs according to a change of a speed of the vehicle, braking data of the vehicle, and video data collected by a camera.

Further, if the in-vehicle equipment determines that a traffic accident has occurred, the in-vehicle equipment may acquire accident information. Specifically, the video data of a preset duration before the accident may be acquired, an identification of the vehicle may also be acquired, and locating information of the vehicle may also be acquired, and these information may be used as the traffic accident information.

In practical applications, the in-vehicle terminal may report the traffic acquired accident information to the server, so that the server may receive the traffic accident information reported by the vehicle, and process the traffic accident according to the traffic accident information, so as to improve the efficiency of processing the traffic accident.

Step 102: transmitting the traffic accident information to an accident processing terminal, where the accident processing terminal is configured to determine accident processing information according to the traffic accident information.

Where the accident processing terminal may be connected to the server, the accident processing terminal may be a terminal device used by an accident processing personnel, for example, the terminal device may be a mobile phone, a mobile station and the like. An application program may be set in the terminal device, and when the terminal device runs the application program, the traffic accident information received by the terminal device may be displayed.

In an optional implementation, the server may determine a target accident processing terminal according to a location of the accident, and transmit the traffic accident information to the target accident processing terminal. For example, the server side may store information of multiple accident processing terminals, each accident processing terminal corresponds to an area, and may transmit traffic accident information to the accident processing terminal corresponding to the area.

Specifically, the accident processing personnel may operate the accident processing terminal so as to preview the traffic accident information. For example, each pending traffic accident information may be displayed in the form of a catalogue in the accident processing terminal. The accident processing personnel may click on any one of the traffic accident information, so that the accident processing terminal displays the detailed content of the traffic accident information.

Further, the traffic accident information may include the location of the accident, the video before the accident, and the identification of the vehicle and the like. The accident processing personnel may process the traffic accident according to these information.

In practical applications, the accident processing personnel may watch the video before the traffic accident to determine an accident liability, and may also operate in the accident processing terminal to identify the accident liability, for example, may generate an accident liability report.

The accident processing personnel may also determine a condition of the accident vehicle and a casualty caused by the accident according to the traffic accident information, so as to operate in the accident processing terminal and arrange a trailer and/or an ambulance.

Specifically, after the accident processing personnel finishes processing the accident, the accident processing terminal may report the accident processing information to the server, and the server coordinates respective terminals according to the accident processing information to complete an accident processing result.

Step 103: receiving the accident processing information transmitted by the accident processing terminal, and synchronizing the accident processing information with the vehicle and an insurance processing terminal.

Further, the accident processing terminal may report the accident processing information to the server, where the accident processing information may include the condition of the accident vehicle, the casualty caused by the accident, and the information on determination of the accident liability.

In practical applications, after receiving corresponding information, the server may synchronize the accident processing information with the vehicle and the insurance processing terminal.

In one implementation, the server may synchronize the information on the determination of the accident liability with the vehicle, so that the vehicle may display the processing result by the display apparatus, in this way, the user can learn the determination result of the accident liability.

In another implementation, if the vehicle has an automatic driving function, the server may also synchronize the determination result of the condition of the accident vehicle and the casualty result of the accident vehicle. If the condition indicates that the vehicle is able to travel, the vehicle may execute the driving strategy according to the casualty result. For example, if there is an injured person inside the vehicle, the vehicle may automatically drive to the hospital.

In another implementation, the server may also synchronize the information on liability determination with the insurance processing terminal. For example, identification information of the vehicle and a result of the liability determination may be transmitted to the insurance processing terminal, so that the insurance processing terminal may make online claims according to these information.

In an optional implementation, the server may determine insurance information, such as a policy number, according to the identification of the accident vehicle. Reimbursement information for the vehicle may be maintained on the server side. The server determines the corresponding insurance processing terminal according to the insurance information of the vehicle, and then synchronizes the information on liability determination with the insurance processing terminal.

Insurance processing personnel may make insurance claims according to the information on liability determination displayed in the insurance processing terminal to improve the efficiency of processing the traffic accident.

FIG. 2 is a schematic diagram of a traffic accident processing process illustrated by an exemplary embodiment of the present disclosure.

As shown in FIG. 2, after a vehicle 21 has a traffic accident, the vehicle 21 may report traffic accident information to a server 22, for example, it may be reported by an in-vehicle equipment arranged in the vehicle 21.

The server 22 may transmit the traffic accident information to an accident processing terminal 23, and an accident processing personnel may operate in the accident processing terminal 23, so that the accident processing terminal 23 generates accident processing information. The accident processing terminal 23 may also report the accident processing information to the server 22.

The server 22 may transmit the accident processing information to the vehicle 21 and also to the insurance processing terminal 24.

The traffic accident processing method provided by the present disclosure includes: receiving traffic accident information reported by a vehicle, where the traffic accident information is acquired when the vehicle determines that a traffic accident occurs according to sensor information; transmitting the traffic accident information to an accident processing terminal, where the accident processing terminal is configured to determine accident processing information according to the traffic accident information; and receiving the accident processing information transmitted by the accident processing terminal, and synchronizing the accident processing information with the vehicle and an insurance processing terminal. In the traffic accident processing method provided by the present disclosure, after a traffic accident occurs, the vehicle can report the traffic accident information to the server, so that the server may coordinate respective terminals to process the accident, thereby improving the efficiency of processing the traffic accident.

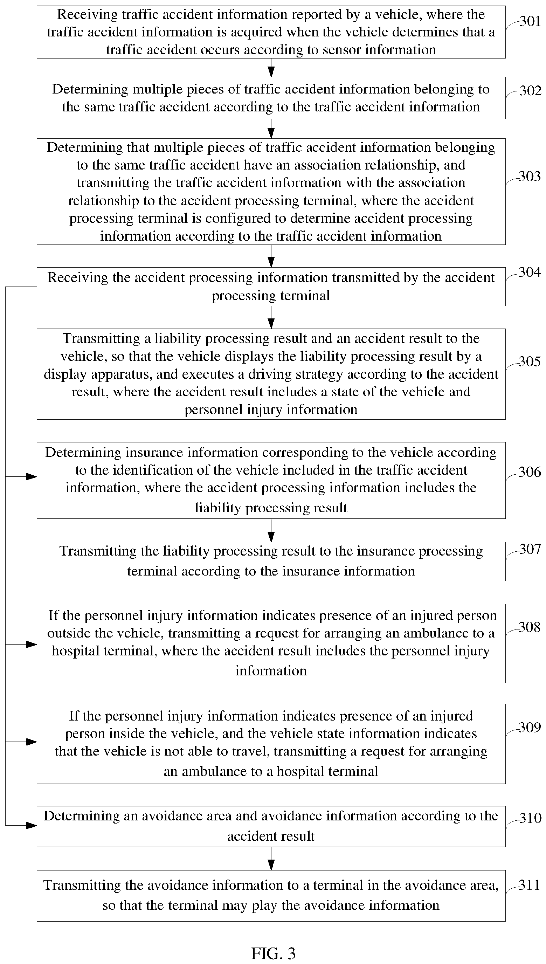

FIG. 3 is a schematic flowchart of a traffic accident processing method illustrated by a second exemplary embodiment of the present disclosure.

As shown in FIG. 3, the traffic accident processing method provided by the present disclosure includes:
Step 301: receiving traffic accident information reported by a vehicle, where the traffic accident information is acquired when the vehicle determines that a traffic accident occurs according to sensor information.

The method provided by the present disclosure is applied to a server side of a traffic accident processing platform.

The implementation of step 301 is similar to that of step 101, which is not described in detail.

Step 302: determining multiple pieces of traffic accident information belonging to the same traffic accident in the traffic accident information.

Specifically, the server may receive traffic accident information reported by multiple vehicles. When a traffic accident occurs on the vehicle, both vehicles involved in the accident may report the traffic accident information.

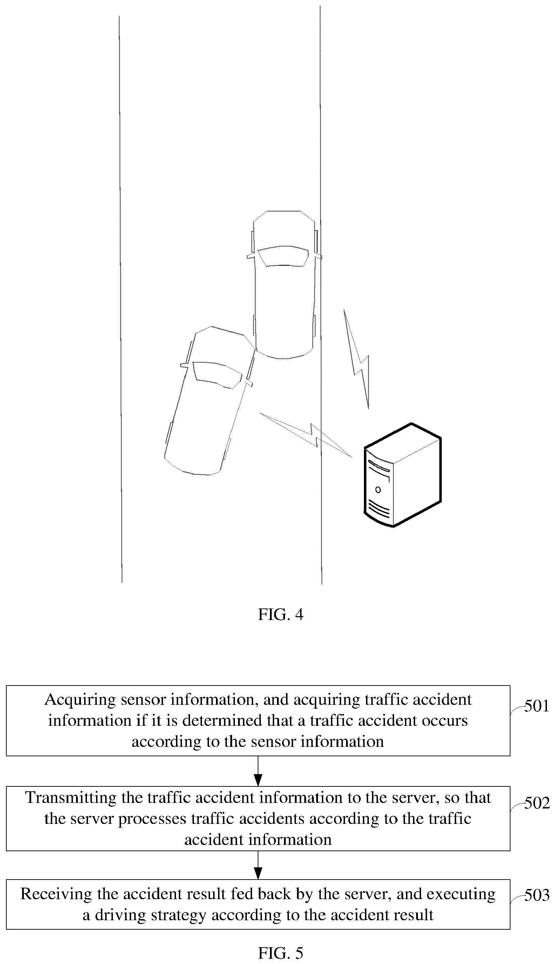

FIG. 4 is a diagram of an application scenario illustrated by an exemplary embodiment of the present disclosure.

As shown in FIG. 4, there are many cars traveling on the road, where there may be many cars with the function of reporting information to the server. At present, when two of the cars collide, the two cars may report traffic accident information to the server.

Further, the server may determine multiple pieces of traffic accident information belonging to the same traffic accident from the multiple pieces of traffic accident information received and may report the multiple pieces of traffic accident information belonging to the same traffic accident to the accident processing terminal, so that the accident processing personnel may use the accident processing terminal to process the multiple pieces of traffic accident information belonging to the same traffic accident at the same time, thereby reducing the number of times of accident processing, to further improve the speed of accident processing.

In practical applications, the server may determine multiple pieces of traffic accident information with consistent features according to locating information and video information in the traffic accident information, and thus determine that the multiple pieces of traffic accident information with the consistent features belong to the same traffic accident.

The server may first determine multiple pieces of traffic accident information suspected to belong to the same traffic accident according to the locating information of respective traffic accident information, and may also determine whether the multiple pieces of traffic accident information suspected to belong to the same traffic accident actually belong to the same traffic accident according to the video information included in respective traffic accident information.

Specifically, if the locations of the accident are close, it may be considered that location features of the traffic accident information are consistent, if the feature of the other vehicle determined according to one piece of traffic accident information and the feature of the vehicle reporting another piece of traffic accident information are consistent, it may be considered that the two pieces of traffic accident information have consistent vehicle features.

If the traffic accident information has consistent features, it may be determined that the traffic accident information with consistent features belong to the same traffic accident.

For example, if the locations of multiple pieces of traffic accident information are close, the server may identify the identification of the other vehicle in the accident according to the video information, so as to determine whether the traffic accident information belongs to the same traffic accident.

In this implementation, the server may determine multiple pieces of traffic accident information belonging to the same traffic accident according to the traffic accident information, and then may jointly process the multiple pieces of traffic accident information belonging to the same traffic accident, thus improving the efficiency of processing the accident.

Step 303: determining that multiple pieces of traffic accident information belonging to the same traffic accident have an association relationship, and transmitting the traffic accident information with the association relationship to the accident processing terminal, where the accident processing terminal is configured to determine accident processing information according to the traffic accident information.

Where if the server determines that multiple pieces of traffic accident information belong to the same traffic accident, the server may determine that the traffic accident information has an association relationship. For example, the server may allocate the same identification for respective traffic accident information belonging to the same traffic accident.

Specifically, the server may transmit the traffic accident information with the association relationship to the accident processing terminal, so that the accident processing terminal may centrally process the multiple pieces of traffic accident information belonging to the same traffic accident, to improve the speed of processing the accident.

In an optional implementation, the server transmits traffic accident information carrying an identification to the accident processing terminal. If the identifications are the same, the accident processing terminal determines that the multiple pieces of traffic accident information belong to the same traffic accident, and then centrally processes the multiple pieces of traffic accident information.

In another scenario, if no other traffic accident information belongs to the same traffic accident as one of the traffic accident information, the traffic accident information is transmitted to the accident processing terminal, so that the accident processing terminal may process the traffic accident information.

Step 304, receiving the accident processing information transmitted by the accident processing terminal.

The implementation of step 304 is similar to that of receiving accident processing information in step 103, which is not described in detail.

After step 304, steps 305, 306, 308, 309, 310 may be executed.

Step 305, transmitting a liability processing result and an accident result to the vehicle, so that the vehicle displays the liability processing result by a display apparatus, and executes a driving strategy according to the accident result, where the accident result includes a state of the vehicle and personnel injury information.

After receiving the accident processing information, the server may transmit the information to the vehicle.

The server may feed back the liability processing result to the vehicle, so that the vehicle displays the liability processing result by the display apparatus, and the user may learn the liability processing result of the accident by the display apparatus.

Specifically, the accident result includes the state of the vehicle and the personnel injury information. The state of the vehicle and the personnel injury information may be determined by the accident processing personnel through watching the video, vehicle information, etc., reported by the vehicle, and the state of the vehicle may include that the vehicle is able to travel or not able to travel. For example, if one of the vehicle's mirrors is knocked off, the accident processing personnel may operate on the accident processing terminal to set the state of the vehicle as "not able to travel". The personnel injury information may be, for example, presence of an injured person inside the vehicle, presence of an injured person outside the vehicle, and the like.

Further, the server may also feed the accident result back to the vehicle, so that the vehicle may execute the driving strategy according to the accident result.

For example, if the vehicle state information indicates that the vehicle is able to travel, and if the personnel injury information indicates presence of an injured person inside the vehicle, a target hospital is determined according to preset high-precision map data, and the vehicle is automatically driven to the target hospital.

The vehicle may determine a nearby hospital according to the high-precision map, and plan a route from the current location to the hospital, so as to automatically drive to the hospital. The vehicle may also report the planned route to the hospital to the server, so that the server broadcasts timely avoidance information to vehicles around the route according to the route.

For another example, if the vehicle state information indicates that the vehicle is able to travel, and if the personnel injury information indicates presence of an injured person outside the vehicle, the environmental information outside the vehicle is acquired; and a safe location is determined according to the environmental information and preset high-precision map data, and the vehicle is automatically driven to the safe location.

Where the vehicle may collect the environmental information around the vehicle by arranged sensors, and determine the safe location in combination with the preset high-precision map data. For example, it may be a service area near the road, and in another example may be a parking space near the road.

The safe location may also be a preset location, for example, may be the nearest vehicle maintenance point designated.

In this implementation, if the vehicle is able to travel, the vehicle may automatically drive to the hospital with the injured person, or drive to a safe location to avoid blocking the road.

Step 306, determining insurance information corresponding to the vehicle according to the identification of the vehicle included in the traffic accident information, where the accident processing information includes the liability processing result.

Where the accident processing information received by the server may include the liability processing result, such as a liability assignment plan for the traffic accident, and the like.

Specifically, the server may maintain the insurance information of the vehicle in advance, and then after receiving the liability processing result, may determine the insurance information of the vehicle according to the identification of the vehicle. For example, the policy number of the insurance or the insurance company or the like may be determined.

Step 307, transmitting the liability processing result to the insurance processing terminal according to the insurance information.

Further, the server may determine an insurance processing terminal for processing the traffic accident according to the insurance information, so as to transmit the liability processing result to the corresponding insurance processing terminal.

For example, the server maintains a relationship between license plate numbers and policy numbers. After receiving the liability processing result, the server may determine the corresponding policy number according to the license plate of the accident vehicle, and determine the corresponding insurance company. After that, the server may transmit the liability processing result to a claims platform of the insurance company, and then start the process of online claims.

In this implementation, after a traffic accident occurs, the accident party does not need to notify the insurance company personnel to arrive at the scene, does not need to report the accident materials to the insurance company, and the claims process may be automatically started. Therefore, the claim efficiency of the claims process in the process of traffic accident processing may be improved.

Step 308, if the personnel injury information indicates presence of an injured person outside the vehicle, transmitting a request for arranging an ambulance to a hospital terminal, where the accident result includes the personnel injury information.

In practical applications, the accident result in the accident processing information received by the server includes personnel injury information. If the personnel injury information indicates the presence of the injured person outside the vehicle, the server may also transmit a request for arranging an ambulance to a hospital terminal.

In another implementation, the accident processing terminal may be operated by the accident processing personnel, so that the accident processing information fed back by the accident processing terminal to the server includes information of calling an ambulance. In this implementation, the server may transmit a request for arranging an ambulance to a hospital terminal according to the information of calling an ambulance included in the accident processing information.

Where the request for arranging an ambulance may include the location of the accident, so that the hospital terminal may arrange the ambulance according to the location of the accident.

In this implementation, when there is an injured person outside the vehicle, the hospital terminal may be coordinated by the server to arrange an ambulance to go to the accident site, so that the injured person outside the vehicle may be treated as soon as possible, thereby reducing the loss of casualty.

Step 309, if the personnel injury information indicates presence of an injured person inside the vehicle, and the vehicle state information indicates that the vehicle is not able to travel, transmitting a request for arranging an ambulance to a hospital terminal.

Specifically, the accident processing information received by the server includes an accident result, and the accident result includes personnel injury information and vehicle state information.

Further, if the personnel injury information indicates presence of an injured person inside the vehicle, and the vehicle state information indicates that the vehicle is not able to travel, the accident vehicle is not able to carry the injured person to the hospital, so the server may transmit a request for arranging an ambulance to a hospital terminal.

In practical applications, the accident processing terminal may be operated by the accident processing personnel, so that the accident processing information fed back by the accident processing terminal to the server includes information of calling an ambulance. In this implementation, the server may transmit a request for arranging an ambulance to a hospital terminal according to the information of calling an ambulance included in the accident processing information.

In this implementation, when there is an injured person inside the vehicle and the vehicle is not able to travel, the hospital terminal may be coordinated by the server to arrange an ambulance to go to the accident site, so that the injured person inside the vehicle may be treated as soon as possible, thereby reducing the loss of casualty.

Step 310, determining an avoidance area and avoidance information according to the accident result.

After a traffic accident occurs, a traffic jam is likely to occur. Therefore, in the solution provided by the present disclosure, the server may also determine the avoidance area and the avoidance information according to the accident result, and then notify surrounding vehicles to avoid in time.

In one implementation, if the personnel injury information indicates presence of an injured person inside the vehicle, and the vehicle state information indicates that the vehicle is able to travel, then the avoidance area is determined according to the location of the vehicle and the hospital location around the location of the vehicle, and the avoidance information is generated according to the avoidance area.

If the personnel injury information in the accident processing information received by the server indicates presence of an injured person inside the vehicle, and the vehicle state information indicates that the vehicle is able to travel, the server may feed back the information to the vehicle, so that the vehicle may carry the injured person to the hospital.

Specifically, the server may also determine the avoidance area according to the location of the vehicle and the hospital location around the location of the vehicle, and generate avoidance information according to the avoidance area. Therefore, the surrounding vehicles may be reminded by the avoidance information to avoid the accident vehicle carrying the injured person.

Further, when carrying the injured person to the hospital, the vehicle may also report a planned driving route to the server, so that the server may determine the avoidance area based on this information. For example, the avoidance area is the area where the route planned by the vehicle is located.

In practical applications, the server may also predict a driving route of the accident vehicle according to the location of the accident and the hospital around the accident, and then may determine the avoidance area according to the predicted route.

Among them, the server may also generate avoidance information according to the avoidance area, and the avoidance information may specifically include the information of the avoided vehicle, such as the license plate number of the avoided vehicle. The avoidance information may also include information of the avoidance area, for example, may include the location where the accident vehicle will pass, so that the surrounding vehicles may avoid the accident vehicle in time.

In an optional implementation, the server may also acquire the location of the accident vehicle in real time, thereby reminding surrounding vehicles to avoid the vehicle in advance.

In this implementation, the vehicle in the area where the accident vehicle passes may avoid the vehicle in time, so that the vehicle may carry the injured person to the hospital as soon as possible.

In another implementation, if the personnel injury information indicates presence of an injured person outside the vehicle, route planning information of the ambulance is acquired; an avoidance area is determined according to the route planning information, and the avoidance information is generated according to the avoidance area.

If the personnel injury information in the accident processing information received by the server indicates presence of an injured person outside the vehicle, the server will transmit a request for arranging an ambulance to a hospital processing terminal, so that the ambulance may go to the accident site to treat the injured person.

In this case, the server may also acquire route planning information of the ambulance, for example, may acquire the route planning information of the ambulance from the hospital processing terminal, and then determine the avoidance area. The avoidance area may include, for example, the area passed by the ambulance when going to the accident site, and may also include the area passed by the ambulance when going to the hospital.

In an optional implementation, the server may also acquire the location of the ambulance in real time, thereby reminding surrounding vehicles to avoid the ambulance in advance.

The server may also generate avoidance information according to the avoidance area, and the avoidance information may specifically include information of the avoided vehicle, such as the license plate number of the avoided vehicle. The avoidance information may also include information of the avoidance area, for example, may include the location where the ambulance will pass, so that the surrounding vehicles may avoid the ambulance in time.

In another implementation, if the personnel injury information indicates presence of an injured person inside the vehicle, and the vehicle state information indicates that the vehicle is not able to travel, route planning information of the ambulance is acquired; an avoidance area is determined according to the route planning information, and avoidance information is generated according to the avoidance area.

If the personnel injury information in the accident processing information received by the server indicates presence of an injured person inside the vehicle, and the vehicle state information indicates that the vehicle is not able to travel, the server will transmit a request for arranging an ambulance to a hospital processing terminal, so that the ambulance may be able to go to the accident scene to treat the injured person.

This implementation is similar to the above-mentioned implementation of determining the avoidance area according to the route planning information of the ambulance, and generating the avoidance information according to the avoidance area, which is not described in detail.

Step 311, transmitting the avoidance information to a terminal in the avoidance area, so that the terminal may play the avoidance information.

The server may transmit the avoidance information to the terminal in the avoidance area, and after receiving the avoidance information, the terminal may play the avoidance information to remind the driver to avoid in time.

In this case, vehicles around the accident can avoid the accident site, or the vehicle carrying the injured person to the hospital, or the ambulance in time, thereby reducing the degree of road congestion caused by the accident and avoiding the problem of road congestion due to the vehicle carrying the injured person being not able to arrive at the hospital in time.

In an optional implementation, the server may play the avoidance information by a navigation software set in the terminal. For example, the server may acquire a location of the accident vehicle carrying the injured person, and transmit the avoidance information to other vehicles around the vehicle according to the location. For another example, the server may acquire a location of the ambulance, and transmit the avoidance information to other vehicles around the ambulance according to the location.

FIG. 5 is a schematic flowchart of a traffic accident processing method illustrated by a third exemplary embodiment of the present disclosure.

As shown in FIG. 5, the traffic accident processing method provided by the present disclosure includes:
Step 501: acquiring sensor information, and acquiring traffic accident information if it is determined that a traffic accident occurs according to the sensor information.

The method provided by the present disclosure is applied to a vehicle, and may be specifically executed by an in-vehicle terminal.

Specifically, an in-vehicle equipment may be arranged on the vehicle, and the in-vehicle equipment may collect sensor information by sensors arranged on the vehicle, and then determine whether a traffic accident occurs in combination with each sensor information. For example, the in-vehicle equipment may determine whether a traffic accident occurs according to a change of speed of the vehicle, braking data of the vehicle, and video data collected by a camera.

Further, if the in-vehicle equipment determines that a traffic accident has occurred, the in-vehicle equipment may acquire accident information. Specifically, video data of a preset duration before the accident may be acquired, an identification of the vehicle may also be acquired, and the locating information of the vehicle may also be acquired, and these information may be used as the traffic accident information.

Step 502: transmitting the traffic accident information to the server, so that the server processes traffic accidents according to the traffic accident information.

In practical applications, the in-vehicle terminal may report the acquired traffic accident information to the server, so that the server may receive the traffic accident information reported by the vehicle, and process the traffic accident according to the traffic accident information, thus improving the efficiency of processing the traffic accident.

Among them, the server may process the traffic accident according to the traffic accident information, for example, transmit the traffic accident information to an accident processing terminal, where the accident processing terminal is configured to determine accident processing information according to the traffic accident information.

Specifically, an accident processing personnel may operate the accident processing terminal, and then process the traffic accident according to these information, so that the traffic accident terminal generates an accident result. Specifically, the condition of the accident vehicle and the casualty caused by the accident may be determined according to the traffic accident information, and operations may also be performed in the accident processing terminal to arrange a trailer and/or an ambulance.

Further, after the accident processing personnel has finished processing the accident, the accident processing terminal may report the accident processing information to the server, and the server will coordinate respective terminals according to the accident processing information to complete an accident processing result.

Step 503: receiving the accident result fed back by the server, and executing a driving strategy according to the accident result.

In practical applications, the server may also synchronize the determination result of the condition of the accident vehicle and the casualty result of the accident vehicle with the vehicle. If the condition indicates that the vehicle is able to travel, the vehicle may execute the driving strategy according to the casualty result. For example, if there is an injured person inside the vehicle, the vehicle may automatically drive to the hospital.

With this implementation, the vehicle may activate the automatic driving function when it is able to travel, thus avoiding traffic blocking.

The traffic accident processing method provided by the present disclosure includes: acquiring sensor information, and then acquiring traffic accident information if it is determined that a traffic accident occurs according to the sensor information; transmitting the traffic accident information to a server, so that the server processes the traffic accident according to the traffic accident information; and receiving an accident result fed back by the server, and executing a driving strategy according to the accident result. After a traffic accident occurs, the vehicle may report the traffic accident information to the server, so that the server may coordinate respective terminals to process the accident, thereby improving the efficiency of processing the traffic accident.

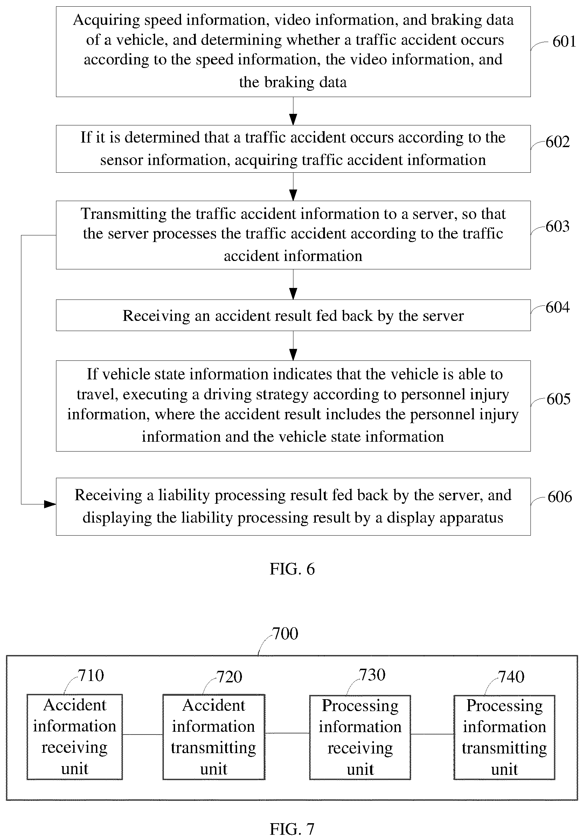

FIG. 6 is a schematic flowchart of a traffic accident processing method illustrated by a fourth exemplary embodiment of the present disclosure.

As shown in FIG. 6, the traffic accident processing method provided by the present disclosure includes:
Step 601: acquiring speed information, video information, and braking data of a vehicle, and determining whether a traffic accident occurs according to the speed information, the video information, and the braking data.

An in-vehicle equipment may be arranged on the vehicle, and the in-vehicle equipment may collect sensor information by sensors arranged on the vehicle, may specifically acquire the speed information, the video information, the braking data, etc. of the vehicle, and then determine whether a traffic accident occurs according to these data.

An algorithm for determining whether a traffic accident occurs may be set in the in-vehicle equipment, and the speed information, the video information, and the braking data of the vehicle may be processed according to the algorithm to determine whether a traffic accident occurs on the vehicle.

Step 602: if it is determined that a traffic accident occurs according to the sensor information, acquiring traffic accident information.

Step 603: transmitting the traffic accident information to a server, so that the server processes the traffic accident according to the traffic accident information.

Step 604: receiving an accident result fed back by the server.

The implementation of steps 602-603 is similar to the implementation of steps 501-502, and the way of receiving the accident result in step 604 is similar to the way of receiving the accident result in step 503, which is not described in detail.

Step 605: if vehicle state information indicates that the vehicle is able to travel, executing a driving strategy according to personnel injury information, where the accident result includes the personnel injury information and the vehicle state information.

If the state of the vehicle indicates that the vehicle is not able to travel, the vehicle can only wait in-place for the trailer.

If the state of the vehicle indicates that the vehicle is able to travel, the vehicle may generate a driving strategy according to the personnel injury information in the accident result, so as to control the vehicle to drive and avoid traffic jam.

In one implementation, if the personnel injury information indicates presence of an injured person inside the vehicle, determining a target hospital according to preset high-precision map data, and automatically driving to a target hospital.

The vehicle may determine a nearby hospital according to the high-precision map, and plan a route from the current location to the hospital, so as to automatically drive to the hospital. The vehicle may also report the planned route to the hospital to the server, so that the server broadcasts timely avoidance information to vehicles around the route according to the route.

In another implementation, if the personnel injury information indicates presence of an injured person outside the vehicle, then acquiring environmental information outside the vehicle; and determining a safe location according to the environmental information and preset high-precision map data, and automatically driving to the safe location.

Where the vehicle may collect the environmental information around the vehicle by arranged sensors, and determine the safe location in combination with the preset high-precision map data. For example, it may be a service area near the road, and in another example may be a parking space near the road.

The safe location may also be a preset location, for example, may be the nearest vehicle maintenance point designated.

Specifically, the vehicle may automatically drive to a safe location so as to avoid traffic jam on the road.

Step 606: receiving a liability processing result fed back by the server, and displaying the liability processing result by a display apparatus.

Further, the accident processing terminal may also transmit the liability processing result to the server, and the server may feed back the liability processing result to the vehicle, so that the vehicle displays the liability processing result by the display apparatus, and the user may know the liability processing result of the accident by the display apparatus.

FIG. 7 is a schematic structural diagram of a traffic accident processing apparatus illustrated by a first exemplary embodiment of the present disclosure.

As shown in FIG. 7, a traffic accident processing apparatus 700 provided by the present disclosure includes:
an accident information receiving unit 710, configured to receive traffic accident information reported by a vehicle, where the traffic accident information is acquired when the vehicle determines that a traffic accident occurs according to sensor information;
an accident information transmitting unit 720, configured to transmit the traffic accident information to an accident processing terminal, where the accident processing terminal is configured to determine accident processing information according to the traffic accident information;
a processing information receiving unit 730, configured to receive the accident processing information transmitted by the accident processing terminal; and
a processing information transmitting unit 740, configured to synchronize the accident processing information with the vehicle and the insurance processing terminal.

The traffic accident processing apparatus shown in FIG. 7 is similar to the embodiment shown in FIG. 1, which is not described in detail.

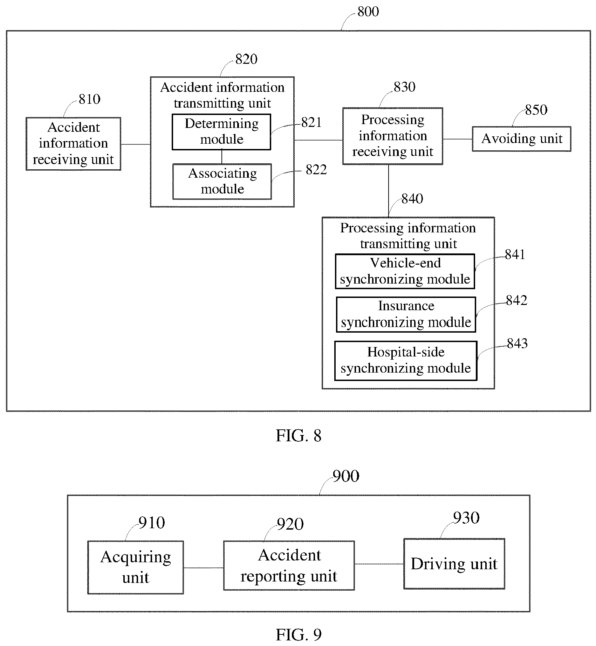

FIG. 8 is a schematic structural diagram of a traffic accident processing apparatus illustrated by a second exemplary embodiment of the present disclosure.

As shown in FIG. 8, an accident information receiving unit 810 in the traffic accident processing apparatus 800 provided by this embodiment is similar to the accident information receiving unit 710 shown in FIG. 7, an accident information transmitting unit 820 is similar to the accident information transmitting unit 720 shown in FIG. 7, a processing information receiving unit 830 is similar to the processing information receiving unit 730 shown in FIG. 7, and a processing information transmitting unit 840 is similar to the processing information transmitting unit 740 shown in FIG. 7.

Where the accident information transmitting unit 820 includes:
a determining module 821, configured to determine multiple pieces of traffic accident information belonging to a same traffic accident according to the traffic accident information; and
an associating module 822, configured to determine that the multiple pieces of traffic accident information belonging to the same traffic accident have an association relationship, and transmit the traffic accident information with the association relationship to the accident processing terminal.

Where the determining module 821 is specifically configured to:
determine multiple pieces of traffic accident information with consistent features according to locating information and video information in the traffic accident information; and
determine that the multiple pieces of traffic accident information with the consistent features belong to the same traffic accident.

Where the accident processing information includes a liability processing result and an accident result;
the processing information transmitting unit 840 includes a vehicle-end synchronizing module 841 configured to:
transmit the liability processing result and the accident result to the vehicle, so that the vehicle displays the liability processing result by a display apparatus, and execute a driving strategy according to the accident result;
where the accident result includes a state of the vehicle and personnel injury information.

Where the accident processing information includes a liability processing result;
the processing information transmitting unit 840 includes an insurance synchronizing module 842 configured to:
determine insurance information corresponding to the vehicle according to an identification of the vehicle comprised in the traffic accident information; and
transmit the liability processing result to the insurance processing terminal according to the insurance information.

Where the accident processing information includes an accident result;
the apparatus further includes an avoiding unit 850 configured to:
determine an avoidance area and avoidance information according to the accident result; and
transmit the avoidance information to the terminal in the avoidance area, so that the terminal plays the avoidance information.

Where the accident result includes personnel injury information and vehicle state information; and the avoiding unit 850 is specifically configured to:
if the personnel injury information indicates presence of an injured person inside the vehicle, and the vehicle state information indicates that the vehicle is able to travel, determine the avoidance area according to a location of the vehicle and a location of a hospital around the location of the vehicle, and generate the avoidance information according to the avoidance area.

Where the accident result includes personnel injury information;
the processing information transmitting unit 840 includes a hospital-side synchronizing module 843 configured to transmit a request for arranging an ambulance to a hospital terminal if the personnel injury information indicates presence of an injured person outside the vehicle;
the avoiding unit 850 is specifically configured to:
   if the personnel injury information indicates the presence of the injured person outside the vehicle, acquire route planning information of the ambulance; and
   determine the avoidance area according to the route planning information, and generate the avoidance information according to the avoidance area.

Where the accident result includes personnel injury information and vehicle state information;
the processing information transmitting unit 840 includes a hospital-side synchronizing module 843 is configured to transmit a request for arranging an ambulance to a hospital terminal if the personnel injury information indicates presence of an injured person inside the vehicle, and the vehicle state information indicates that the vehicle is not able to travel;
the avoiding unit 850 is specifically configured to:
   if the personnel injury information indicates the presence of the injured person inside the vehicle, and the vehicle state information indicates that the vehicle is not able to travel, acquire route planning information of the ambulance; and
   determine the avoidance area according to the route planning information, and generate the avoidance information according to the avoidance area.

The embodiment shown in FIG. 8 is similar to the embodiment shown in FIG. 3, which is not described in detail.

FIG. 9 is a schematic structural diagram of a traffic accident processing apparatus illustrated by a third exemplary embodiment of the present disclosure.

As shown in FIG. 9, a traffic accident processing device 900 provided by the present disclosure includes:
an acquiring unit 910, configured to acquire sensor information, and acquire traffic accident information if it is determined that a traffic accident occurs according to the sensor information;
an accident reporting unit 920, configured to transmit the accident information to a server, so that the server processes the traffic accident according to the traffic accident information; and
a driving unit 930, configured to receive an accident result fed back by the server, and execute a driving strategy according to the accident result.

The embodiment shown in FIG. 9 is similar to the embodiment shown in FIG. 5, which is not described in detail.

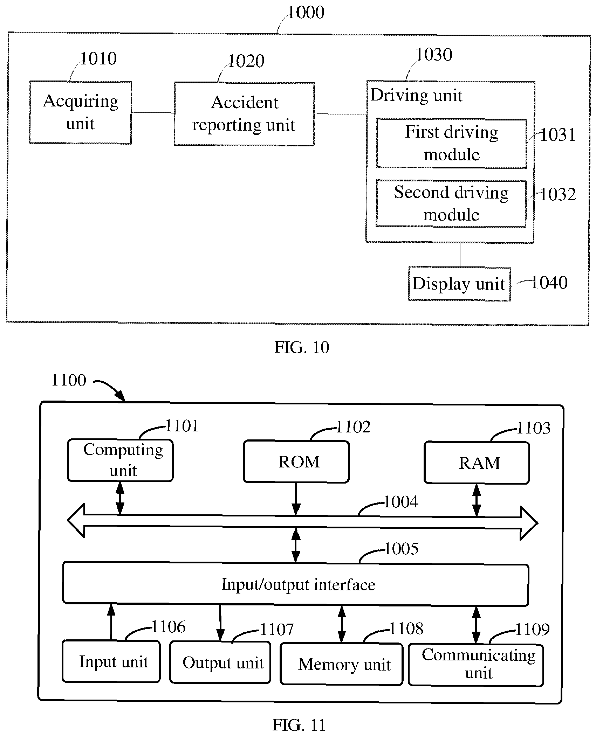

FIG. 10 is a schematic structural diagram of a traffic accident processing apparatus illustrated by a fourth exemplary embodiment of the present disclosure.

As shown in FIG. 10, in the traffic accident processing apparatus 1000 provided by the present disclosure, an acquiring unit 1010 is similar to the acquiring unit 910 shown in FIG. 9, and an accident reporting unit 1020 is similar to the accident reporting unit 920 shown in FIG. 9, a driving unit 1030 is similar to the driving unit 930 shown in FIG. 9.

Where the accident result includes personnel injury information and vehicle state information;
the driving unit 1030 is specifically configured to:
if the vehicle state information indicates that the vehicle is able to travel, execute the driving strategy according to the personnel injury information.

Where the driving unit 1030 includes:
a first driving module 1031, configured to determine a target hospital according to preset high-precision map data, and automatically drive to the target hospital, if the personnel injury information indicates presence of an injured person inside the vehicle.

Where the driving unit 1030 includes:
a second driving module 1032, configured to:
if the personnel injury information indicates presence of an injured person outside the vehicle, acquiring environmental information outside the vehicle; and
determine a safe location according to the environmental information and preset high-precision map data, and automatically drive to the safe location.

Where the acquiring unit 1010 is specifically configured to:
acquire speed information, video information, and braking data of the vehicle;
the apparatus further includes an accident determination unit configured to:
   determine whether a traffic accident occurs according to the speed information, video information, and braking data.

Where the apparatus further includes a display unit 1040 configured to:
receive a liability processing result fed back by the server, and display the liability processing result by a display apparatus.

The present disclosure provides a traffic accident processing method and apparatus, a device, a storage medium and a program product, which are applied to automatic driving technology in artificial intelligence technology to provide a quick solution to solve traffic accidents.

In the technical solution of the present disclosure, the access, storage, and application of personal information of a user involved are all in line with the provisions of relevant laws and regulations, and do not violate public order and good customs.

According to an embodiment of the present disclosure, the present disclosure also provides an electronic device, a readable storage medium and a computer program product.

According to an embodiment of the present disclosure, the present disclosure also provides a computer program product, the computer program product includes: a computer program, the computer program is stored in a readable storage medium, at least one processor of an electronic device may read the computer program from the readable storage medium, the at least one processor executes the computer program to enable the electronic device to execute the solution provided by any of the above embodiments.

FIG. 11 shows a schematic block diagram of an electronic device for implementing an embodiment of the present disclosure. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. Components shown herein, connections and relationships thereof, as well as functions thereof are merely examples and are not intended to limit implementations of the present application described and/or claimed herein.

As shown in FIG. 11, the electronic device 1100 includes a computing unit 1101, which may execute various suitable actions and processing according to a computer program stored in a read-only memory (ROM) 1102 or a computer program loaded from a memory unit 1108 into a random access memory (RAM) 1103. In the RAM 1103, various programs and data required for operations of the device 1100 may also be stored. The computing unit 1101, the ROM 1102, and the RAM 1103 are connected to each other by a bus 1104. An input/output (I/O) interface 1105 is also connected to the bus 1104.

Multiple components in the device 1100 are connected to the I/O interface 1105, including: an input unit 1106, such as a keyboard, a mouse, etc.; an output unit 1107, such as various types of displays, speakers, etc.; a memory unit 1108, such as a magnetic disk, an optical disk, etc.; and a communicating unit 1109, such as a network card, a modem, a wireless communication transceiver, etc. The communicating unit 1109 allows the device 1100 to exchange information/data with other devices via a computer network such as the Internet and/or various telecommunication networks.

The computing unit 1101 may be various general-purpose and/or special-purpose processing components with processing and computing capabilities. Some examples of the computing unit 1101 include, but are not limited to, a central processing unit (CPU), a graphics processing unit (GPU), various special-purpose artificial intelligence (AI) computing chips, various computing units that run machine learning model algorithms, and a digital signal processor (DSP), and any suitable processors, controllers, microcontrollers, etc. The computing unit 1101 executes the various methods and processes described above, such as the traffic accident processing method. For example, in some embodiments, the traffic accident processing method may be implemented as a computer software program, which is tangibly contained in a machine-readable medium, such as the memory unit 1108. In some embodiments, part or all of the computer program may be loaded and/or installed on the device 1100 via the ROM 1102 and/or the communicating unit 1109. When the computer program is loaded into the RAM 1103 and executed by the computing unit 1101, one or more steps of the traffic accident processing method described above may be executed. Alternatively, in other embodiments, the computing unit 1101 may be configured to execute the traffic accident processing method in any other suitable manners (for example, by means of firmware).

Various implementations of the systems and techniques described above herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software, and/or their combination. These various embodiments may include: being implemented in one or more computer programs, the one or more computer programs may be executed and/or interpreted on a programmable system including at least one programmable processor, the programmable processor may be a special-purpose or general-purpose programmable processor that may receive data and instructions from a storage system, at least one input apparatus, and at least one output apparatus, and transmit data and instructions to the storage system, the at least one input apparatus, and the at least one output apparatus.

The program codes used to implement the method of the present disclosure may be written in any combination of one or more programming languages. These program codes may be provided to a processor or a controller of a general-purpose computer, a special-purpose computer, or other programmable data processing apparatus, so that when the program codes are executed by the processor or controller, the functions/the operations specified in the flowcharts and/or block diagrams are implemented. The program codes may be executed entirely on a machine, partly executed on the machine, partly executed on the machine and partly executed on a remote machine as an independent software package, or entirely executed on the remote machine or server.

In the context of the present disclosure, a machine-readable medium may be a tangible medium, which may contain or store a program for use by an instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable storage medium will include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above content.

In order to provide interaction with a user, the systems and techniques described herein may be implemented on a computer with: a display apparatus (for example, a cathode ray tube (CRT) or liquid crystal display (LCD) monitor) for displaying information to the user; and a keyboard and pointing apparatus (for example, a mouse or a trackball), with which the user may provide inputs to the computer. Other kinds of apparatuses may also be used to provide interaction with users; for example, feedback provided to the user may be any form of sensory feedback (e.g., visual feedback, auditory feedback, or tactile feedback); and the inputs from the user may be received in any form (including sound inputs, voice inputs, or tactile inputs).

The systems and techniques described herein may be implemented in a computing system (e.g., as a data server) that includes back-end components, a computing system (e.g., an application server) that includes middleware components, a computing system (e.g., a user computer with a graphical user interface or a web browser, through which the user may interact with the implementation of the systems and techniques described herein) that includes front-end components, or a computing system that includes any combination of such back-end components, middleware components or front-end components. The components of the system may be interconnected by digital data communication (e.g., a communication network) of any form or medium. The examples of the communication network include: a local region network (LAN), a wide region network (WAN) and the Internet.

The computer system may include a client and a server. The client and the server are generally far from each other and usually interact through a communication network. The client-server relationship is generated by computer programs that run on corresponding computers and have a client-server relationship. The server may be a cloud server, also known as a cloud computing server or a cloud host, which is a host product in a cloud computing service system to solve shortcomings of difficult management and weak business scalability existed in traditional physical hosts and VPS services ("Virtual Private Server", or "VPS" for short). The server may also be a server of a distributed system, or a server combined with a blockchain.

It should be understood that for the various forms of processes shown above, steps may be reordered, added or deleted. For example, the steps described in the present disclosure may be executed in parallel, sequentially, or in different orders, as long as the desired results of the technical solutions disclosed in the present disclosure may be achieved, which is not limited herein.

The above specific implementations do not constitute a limitation on the scope of protection of the present disclosure. Those skilled in the art should understand that various modifications, combinations, sub-combinations and substitutions may be made according to design requirements and other factors. Any modification, equivalent replacement and improvement made within the principle of the present disclosure shall fall within the scope of protection of the present disclosure.

## Claims

1. A traffic accident processing method, comprising:
receiving (101, 301) traffic accident information reported by a vehicle, wherein the traffic accident information is acquired when the vehicle determines that a traffic accident occurs according to sensor information;
transmitting (102) the traffic accident information to an accident processing terminal, wherein the accident processing terminal is configured to determine accident processing information according to the traffic accident information; and
receiving (103, 304) the accident processing information transmitted by the accident processing terminal, and synchronizing(103) the accident processing information with the vehicle and an insurance processing terminal.

2. The method according to claim 1, wherein the transmitting(102) the traffic accident information to an accident processing terminal comprises:
determining (302) multiple pieces of traffic accident information belonging to a same traffic accident according to the traffic accident information; and
determining (303) that the multiple pieces of traffic accident information belonging to the same traffic accident have an association relationship, and transmitting (303) the traffic accident information with the association relationship to the accident processing terminal.

3. The method according to claim 2, wherein the determining(302) the multiple pieces of traffic accident information belonging to the same traffic accident according to the traffic accident information comprises:
determining multiple pieces of traffic accident information with consistent features according to locating information and video information in the traffic accident information; and
determining that the multiple pieces of traffic accident information with the consistent features belong to the same traffic accident.

4. The method according to any one of claims 1 to 3, wherein the accident processing information comprises a liability processing result and an accident result;
wherein the synchronizing (103) the accident processing information with the vehicle comprises:
transmitting (305) the liability processing result and the accident result to the vehicle, so that the vehicle displays the liability processing result by a display apparatus, and executes a driving strategy according to the accident result;
wherein the accident result comprises a state of the vehicle and personnel injury information.

5. The method according to any one of claims 1 to 4, wherein the accident processing information comprises a liability processing result;
wherein the synchronizing (103) the accident processing information with an insurance processing terminal comprises:
determining (306) insurance information corresponding to the vehicle according to an identification of the vehicle comprised in the traffic accident information; and
transmitting (307) the liability processing result to the insurance processing terminal according to the insurance information.

6. The method according to any one of claims 1 to 5, wherein the accident processing information comprises an accident result;
the method further comprises:
determining (310) an avoidance area and avoidance information according to the accident result; and
transmitting (311) the avoidance information to the terminal in the avoidance area, so that the terminal plays the avoidance information.

7. The method according to claim 6, wherein the accident result comprises personnel injury information and vehicle state information;
wherein the determining (310) the avoidance area and the avoidance information according to the accident result comprises:
if the personnel injury information indicates presence of an injured person inside the vehicle, and the vehicle state information indicates that the vehicle is able to travel, determining the avoidance area according to a location of the vehicle and a location of a hospital around the location of the vehicle, and generating the avoidance information according to the avoidance area.

8. The method according to claim 6, wherein the accident result comprises personnel injury information;
the method further comprises: if the personnel injury information indicates presence of an injured person outside the vehicle, transmitting (308) a request for arranging an ambulance to a hospital terminal;
wherein the determining (310) the avoidance area and the avoidance information according to the accident result comprises:
if the personnel injury information indicates the presence of the injured person outside the vehicle, acquiring route planning information of the ambulance; and
determining the avoidance area according to the route planning information, and generating the avoidance information according to the avoidance area.

9. The method according to claim 6, wherein the accident result comprises personnel injury information and vehicle state information;
the method further comprises: if the personnel injury information indicates presence of an injured person inside the vehicle, and the vehicle state information indicates that the vehicle is not able to travel, transmitting (309) a request for arranging an ambulance to a hospital terminal;
wherein the determining (310) the avoidance area and the avoidance information according to the accident result comprises:
if the personnel injury information indicates the presence of the injured person inside the vehicle, and the vehicle state information indicates that the vehicle is not able to travel, acquiring route planning information of the ambulance; and
determining the avoidance area according to the route planning information, and generating the avoidance information according to the avoidance area.

10. A traffic accident processing method applied to a vehicle, comprising:
acquiring (501) sensor information, and acquiring (501, 602) traffic accident information if it is determined that a traffic accident occurs according to the sensor information;
transmitting (502) the traffic accident information to a server, so that the server processes the traffic accident according to the traffic accident information; and
receiving (503) an accident result fed back by the server, and executing (503) a driving strategy according to the accident result.

11. The method according to claim 10, wherein the accident result comprises personnel injury information and vehicle state information;
wherein the executing (503) a driving strategy according to the accident result comprises:
if the vehicle state information indicates that the vehicle is able to travel, executing (605) the driving strategy according to the personnel injury information.

12. The method according to claim 11, wherein the executing (605) the driving strategy according to the personnel injury information comprises:
if the personnel injury information indicates presence of an injured person inside the vehicle, determining a target hospital according to preset high-precision map data, and automatically driving to the target hospital.

13. The method according to claim 11, wherein the executing (605) the driving strategy according to the personnel injury information comprises:
if the personnel injury information indicates presence of an injured person outside the vehicle, acquiring environmental information outside the vehicle; and
determining a safe location according to the environmental information and preset high-precision map data, and automatically driving to the safe location.

14. The method according to any one of claims 10 to 13, wherein the acquiring sensor information comprises:
acquiring (601) speed information, video information, and braking data of the vehicle;
the method further comprises:
determining (601) whether a traffic accident occurs according to the speed information, the video information, and the braking data.

15. The method according to any one of claims 10 to 14, further comprising:
receiving (606) a liability processing result fed back by the server, and displaying the liability processing result by a display apparatus.
